(19) Europäisches Patentamt
European Patent Office
Office européen des brevets

(11) **EP 4 593 333 A1**

(12) **EUROPEAN PATENT APPLICATION**
published in accordance with Art. 153(4) EPC

(43) Date of publication:
**30.07.2025 Bulletin 2025/31**

(21) Application number: **23867039.2**

(22) Date of filing: **27.06.2023**

(51) International Patent Classification (IPC):
***H04L 25/03*** (2006.01)

(52) Cooperative Patent Classification (CPC):
**H04L 1/00; H04L 25/03**

(86) International application number:
**PCT/CN2023/102686**

(87) International publication number:
**WO 2024/060744 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.09.2022 CN 202211152294**

(71) Applicant: **Sanechips Technology Co., Ltd.
Shenzhen, Guangdong 518055 (CN)**

(72) Inventors:
• **LI, Jinxin
Shenzhen, Guangdong 518055 (CN)**
• **LU, Xiaofan
Shenzhen, Guangdong 518055 (CN)**

(74) Representative: **Cristinelli, Luca et al
Jacobacci & Partners S.p.A.
Corso Emilia, 8
10152 Torino (IT)**

(54) **MAXIMUM LIKELIHOOD SEQUENCE DETECTION CIRCUIT, DETECTION METHOD, DETECTION APPARATUS AND ELECTRONIC DEVICE**

(57)    Provided in the present invention are a detection circuit, a detection method and a detection apparatus for a maximum likelihood sequence, and an electronic device. The detection circuit for a maximum likelihood sequence comprises an equalization processing module, configured to perform equalization processing on an output signal from an analog-to-digital converter (ADC) and output a soft value based on the output signal from the ADC; a state selection module, connected to the equalization processing module and configured to determine a target signal state based on the soft value; and a detection module, connected to the state selection module and configured to perform maximum likelihood sequence detection based on the target signal state and output a detection result after decoding.

Fig. 1

**Description**

**Cross-Reference to Related Application**

This patent disclosure claims priority to Chinese Patent Application No. 202211152294.0, filed with the China National Intellectual Property Administration on September 21, 2022, the invention of which is incorporated herein by reference in its entirety.

**Technical Field**

The present invention relates to the field of electronic circuit technologies, and in particular, to a detection circuit, a detection method and a detection apparatus for a maximum likelihood sequence, and an electronic device.

**Background**

In a high-speed interconnection communication receiver, as the data rate is increased, the channel environment is bad, and the requirement for digital equalization capability also becomes higher. Therefore, in digital equalization, besides a Feed Forward Equalizer (FFE) and a Decision Feedback Equalizer (DFE), a Maximum Likelihood Sequence Detector (MLSD) is introduced to improve the equalization capability to meet the performance requirements. In the MLSD processing, the metric values of various state branches of a signal need to be calculated, and operations such as add-compare-select, survivor path update, and path backtracking are performed on this basis. The calculation amount for each step of processing is positively correlated with the number of state branches, and for an N-tap MLSD with M signal states, the number of state branches is $M^{N-1}$.

In relevant solutions, all the state branches need to go through the same calculation process, and after calculating the metric values, the branches are excluded by add-compare-select operations, resulting in a large calculation amount and power consumption for detecting a maximum likelihood sequence.

**Summary**

The object of the embodiments of the present invention is to provide a detection circuit, a detection method and a detection apparatus for a maximum likelihood sequence, and an electronic device, which can reduce the calculation amount and power consumption for detecting a maximum likelihood sequence.

In order to solve the described technical problem, the embodiments of the present invention are implemented by the following aspects.

According to a first aspect, the present invention provides a detection circuit for a maximum likelihood sequence, comprising: an equalization processing module 10, configured to perform equalization processing on an output signal from an analog-to-digital converter (ADC) and output a soft value based on the output signal from the ADC; a state selection module 20, connected to the equalization processing module 10 and configured to determine a target signal state based on the soft value; and a detection module 30, connected to the state selection module 20 and configured to perform maximum likelihood sequence detection based on the target signal state and output a detection result after decoding.

According to a second aspect, the present invention provides a detection method for a maximum likelihood sequence, comprising: equalization processing is performed on an output signal from the ADC, and a soft value is output based on the output signal from the ADC; a target signal state matching the soft value is determined; and a maximum likelihood sequence is detected based on the target signal state, and a detection result is output after decoding.

According to a third aspect, the present invention provides a detection apparatus for a maximum likelihood sequence, comprising: an output module, configured to perform equalization processing on an output signal from the ADC and output a soft value based on the output signal from the ADC; a determining module, configured to determine a target signal state matching the soft value; and a detection module 30, configured to detect a maximum likelihood sequence based on the target signal state and output a detection result after decoding.

According to a fourth aspect, the present invention provides an electronic device, comprising: a memory, a processor, and computer executable instructions stored on the memory and capable of running on the processor, wherein the computer executable instructions, when executed by the processor, implement the detection method for a maximum likelihood sequence based on the second aspect.

According to a fifth aspect, the present invention provides a computer readable storage medium, wherein the computer readable storage medium stores one or more programs which, when executed by an electronic device comprising a plurality of application programs, cause the electronic device to implement the detection method for a maximum likelihood sequence based on the second aspect.

## Brief Description of the Drawings

To describe the technical solutions in the embodiments of the present invention or in the prior art more clearly, the following briefly introduces the drawings required for description in the embodiments or the prior art. Apparently, the drawings in the following description show merely some embodiments disclosed in the present invention, and a person of ordinary skill in the art may still derive other drawings from these drawings without inventive efforts.

Fig. 1 shows a schematic structural diagram of a detection circuit for a maximum likelihood sequence according to an embodiment of the present invention;

Fig. 2 shows a schematic structural diagram of a detection circuit for a maximum likelihood sequence according to an embodiment of the present invention;

Fig. 3 shows a schematic structural diagram of a state selection module according to an embodiment of the present invention;

Fig. 4 shows a schematic structural diagram of a detection circuit for a maximum likelihood sequence according to an embodiment of the present invention;

Fig. 5 shows a schematic flowchart of a detection method for a maximum likelihood sequence according to an embodiment of the present invention;

Fig. 6 shows a schematic structural diagram of a detection apparatus for a maximum likelihood sequence according to an embodiment of the present invention; and

Fig. 7 shows a schematic structural diagram of hardware of an electronic device according to an embodiment of the present invention.

## Detailed Description of the Embodiments

In order to make persons skilled in the art better understand the solutions of the present invention, the following clearly and completely describes the technical solutions in the embodiments of the present invention with reference to the drawings of the present invention. Apparently, the described embodiments are merely some of rather than all of the embodiments of the present invention. All other embodiments obtained by persons of ordinary skill in the art based on the embodiments of the present invention without inventive efforts shall belong to the scope of protection of the present invention.

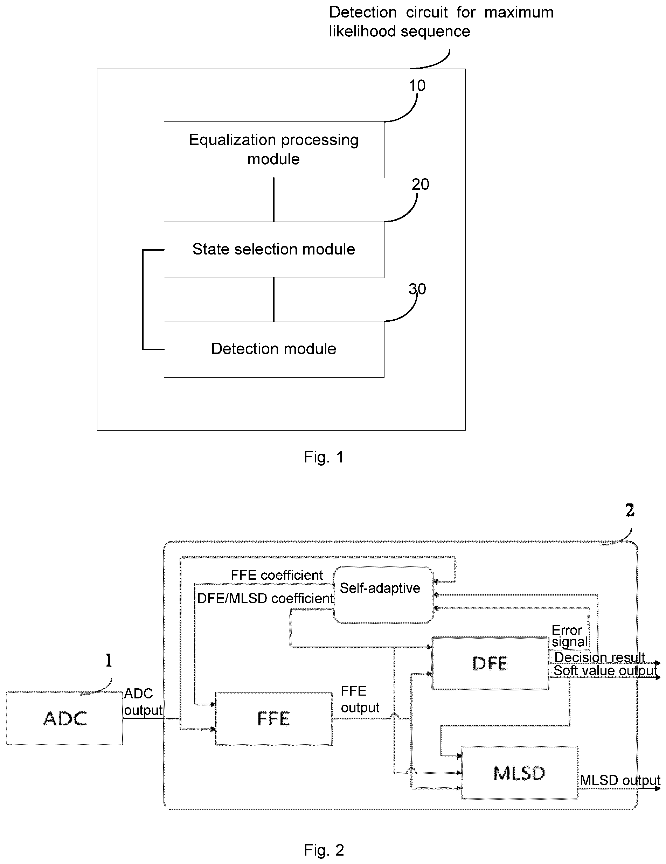

Fig. 1 shows a schematic structural diagram of a detection circuit for a maximum likelihood sequence according to an embodiment of the present invention. The detection circuit for a maximum likelihood sequence comprises: an equalization processing module 10, a state selection module 20 and a detection module 30.

The equalization processing module 10 is configured to perform equalization processing on an output signal from an analog-to-digital converter (ADC) and output a soft value based on the output signal from the ADC. The state selection module 20 is connected to the equalization processing module 10 and configured to determine a target signal state based on the soft value. The detection module 30 is connected to the state selection module 20 and configured to perform maximum likelihood sequence detection based on the target signal state and output a detection result after decoding.

In an implementation, Fig. 2 shows a schematic structural diagram of a detection circuit for a maximum likelihood sequence according to an embodiment of the present invention. In a high-speed communication link receiver of multi-state signals, after signals that have been processed by an analog front end are sampled by an ADC 1, a digital signal is sent to a detection circuit 2 for a maximum likelihood sequence. The detection circuit 2 for a maximum likelihood sequence comprises: an equalization processing module 10, a state selection module 20, a detection module 30 and a coefficient self-adaptive module. The equalization processing module 10 may comprise: an FFE and/or a DFE. The equalization processing module 10 may comprise a DFE, and output a soft value by the DFE. If a system does not comprise a DFE for digital equalization, an output of the FFE itself can achieve a better equalization effect, and the output of the FFE can also be used as a soft value required in the solution of the present invention, that is, the equalization processing module 10 may only comprise the FFE. The detection module 30 may comprise an MLSD. The signals that have been processed by the FFE are respectively sent to the DFE and the MLSD for processing. Based on mode selection, the DFE may work alone or may work together with the MLSD, and when the DFE performance satisfies a predetermined requirement, the DFE may be turned on alone to complete equalization work, and the DFE output is the digital equalization output of the receiver. When the MLSD needs to work, the DFE and the MLSD may be turned on at the same time, and the output of the MLSD is used as the digital equalization output of the receiver. The tap coverage of the DFE and the MLSD is the same, and Inter Symbol Interference (ISI) outside the coverage is eliminated by the analog front end and the FFE.

In an embodiment, the DFE and the MLSD may share a set of self-adaptive tap coefficients. In an embodiment, the tap coefficients of the MLSD may also be inconsistent with those of the DFE. That is, a compensation result of the DFE itself is used as a soft value, and a compensation result is calculated after the taps covered by the MLSD are excluded and used as the input of the MLSD.

For the MLSD, all the state branches need to go through the same calculation process, and after calculating the metric values, the branches are excluded by add-compare-select operations, that is, the signal state with a level value far from the DFE soft value is also subjected to the same calculation and then is excluded, resulting in waste of calculation amount. In the present invention, using a soft value output by an existing DFE module can directly exclude the signal state with a level value far from the DFE soft value, thereby selecting state branches requiring MLSD processing. In this way, the MLSD does not need to calculate the excluded state branches in the processing process, thereby reducing the calculation amount. Because the DFE soft value used for filtering is reliable enough, selecting states near the soft value to perform MLSD processing can basically ensure that correct signal states are covered, such that the MLSD performance after optimizing the number of branch states will not decrease. In this way, by using an existing DFE output result, without causing an obvious performance loss, the present invention can significantly reduce power consumption and area overhead required for implementing an MLSD that processes multi-state signals.

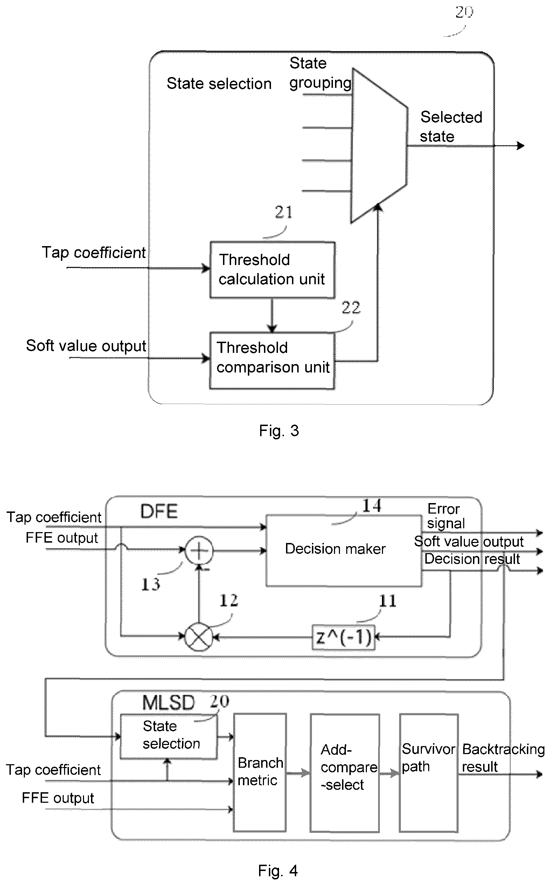

In an implementation, Fig. 3 shows a schematic structural diagram of a state selection module according to an embodiment of the present invention. As shown in Fig. 3, the state selection module 20 comprises: a threshold calculation unit 21 and a threshold comparison unit 22.

The threshold calculation unit 21 is configured to calculate a level value corresponding to each state of a signal based on an inputted first coefficient value, i.e. the first tap coefficient value, and calculate a decision threshold based on the level value corresponding to each state. The threshold comparison unit 22 is connected to the threshold calculation unit 21 and configured to select a target signal state matching the soft value.

In an implementation, Fig. 4 shows a schematic structural diagram of a detection circuit for a maximum likelihood sequence according to an embodiment of the present invention. As shown in Fig. 4, the equalization processing module 10 comprises: a delay processor 11, a multiplication processor 12, an input port 13 and a decision maker 14.

The delay processor 11 is configured to delay a first decision result. The multiplication processor 12 is connected to the delay processor 11 and configured to multiply the delayed first decision result by a second coefficient value to obtain a compensation parameter. The input port 13 is connected to the multiplication processor 12 and configured to receive input data and the compensation parameter, and compensate the input data based on the compensation parameter to obtain the soft value. The decision maker 14 is connected to the input port 13 and configured to make a decision on the soft value to obtain a second decision result.

In an embodiment, the DFE may be of one or more orders, and there may be one or more delayed decision results. Second input data may become first input data in the next clock cycle processing, with a delayed relationship there between. A first coefficient value and a second coefficient value are independent of each other, and the coefficients for different taps can be calculated respectively.

The equalization processing module 10, the state selection module 20 and the detection module 30 may work at the same time. In an implementation, the detection module 30 comprises: an MLSD and the state selection module 20 is disposed in the MLSD. In an embodiment, the first coefficient value and the second coefficient value are different, the second coefficient value may be a plurality of values, and the number of the second coefficient values depends on the order of the DFE. The MLSD further comprises: a branch metric module, an add-compare-select module, and a survivor path module.

Specifically, FFE equalization refers to a digital signal passing through a Finite Impulse Response (FIR) filter. An FFE with N tap coefficients receives data $d_{ADC}$ output by an ADC and an FFE coefficient $f_{0\sim N-1}$ output by a self-adaptive module, and obtains an output result $d_{FFE}$ by FIR filtering.

$$d_{FFE}(t) = \sum_{i=0}^{N-1} d_{ADC}(t-i) \times f_i$$

The output result is sent to a DFE and an MLSD as input signals.

The DFE compensates the input signal on the basis of a decision result and makes a decision on the result after compensation. Taking a 1-tap DFE for a 4-Level Pulse Amplitude Modulation (PAM4) signal as an example, upon receiving an output $d_{FFE}$ of the FFE, the DFE calculates a soft value result $d_{DFE}$ based on a decision result $s_{DFE}$ at a previous moment and a tap coefficient $h_1$.

$$d_{DFE}(t) = d_{FFE}(t) - h_1 \times a\big(s_{DFE}(t-1)\big)$$

In the formula, a represents the level value corresponding to the decision result state. The soft value result is sent to a decision maker to compare with the threshold to obtain a decision result. For the PAM4 signal, the decision threshold comprises:

$$thr_{DFE}[0] = \frac{h_0 \times a(0) + h_0 \times a(1)}{2}$$

$$thr_{DFE}[1] = \frac{h_0 \times a(1) + h_0 \times a(2)}{2}$$

$$thr_{DFE}[2] = \frac{h_0 \times a(2) + h_0 \times a(3)}{2}$$

The decision result $s_{DFE} = 0$ when the soft value result $d_{DFE} \leq thr_{DFE}[0]$, $s_{DFE} = 1$ when the soft value result $thr_{DFE}[0] < d_{DFE} \leq thr_{DFE}[1]$, $s_{DFE} = 2$ when the soft value result $thr_{DFE}[1] < d_{DFE} \leq thr_{DFE}[2]$, and $s_{DFE} = 3$ when $d_{DFE} > thr_{DFE}[2]$. The obtained decision result $s_{DFE}$ is output as a decision result of digital equalization when the DFE works separately, and when the MLSD works, the soft value result $d_{DFE}$ obtained previously needs to be sent to the MLSD. In addition, after the decision result is obtained, error information also needs to be calculated and sent to the self-adaptive module for coefficient self-adaptation.

$$err = d_{DFE} - h_0 \times a(s_{DFE})$$

In an implementation of the state selection module 20, a level value corresponding to each state of a signal is calculated based on an inputted first coefficient value; a decision threshold is determined based on the level value corresponding to each state; and at least two target signal states matching the soft value are selected from at least three signal states based on the decision threshold.

In an implementation, the step that at least two target signal states matching the soft value are selected from at least three signal states based on the decision threshold comprises at least one of the following cases.

When the soft value is less than or equal to a first threshold, the target signal state is a first signal state or a second signal state; the first threshold is determined based on a first signal state parameter and a third signal state parameter.

When the soft value is greater than the first threshold and less than or equal to a second threshold, the target signal state is the second signal state or a third signal state; the second threshold is determined based on a second signal state parameter and a fourth signal state parameter.

When the soft value is greater than the second threshold, the target signal state is the third signal state or a fourth signal state.

For example, a group of states with the level values closest to the DFE soft value are selected as the state branches for MLSD processing. Taking selection of 2 states for the PAM4 signal as an example, the state selection module calculates the decision threshold based on the coefficient. The PAM4 states are denoted as 0, 1, 2 and 3 based on the level values from low to high. When the DFE soft value is not greater than the average value of state 0 and state 2, the two states closest to the soft value are 0 and 1. When the DFE soft value is greater than the average value of state 0 and state 2, the DFE soft value needs to be compared with the average value of state 1 and state 3. If the DFE soft value is not greater than the average value of state 1 and state 3, the two states close to the soft value are 1 and 2; otherwise, the two states close to the soft value are 2 and 3. The specific calculation and comparison process is as follows:

$$thr_{MLSD}[0] = \frac{h_0 \times a(0) + h_0 \times a(2)}{2}$$

$$thr_{MLSD}[1] = \frac{h_0 \times a(1) + h_0 \times a(3)}{2}$$

When the soft value result sent by the DFE $d_{DFE} \leq thr_{MLSD}[0]$, the selected state $k_{sel} = [0,1]$, when $thr_{MLSD}[0] < d_{DFE} \leq thr_{MLSD}[1]$, $k_{sel} = [1,2]$, and when $d_{DFE} > thr_{MLSD}[1]$, $k_{sel} = [2,3]$. In this way, the number of states that need to be processed by the MLSD is reduced from 4 to 2, and the state selection result is sent to the subsequent branch metric and survivor path parts for subsequent processing.

The branch metric module no longer calculates for all states of the signal, but for the selected states. The level value of each received selected state is multiplied by the tap coefficients and summation is performed, and then a difference from the output of the FFE is obtained and a square operation is performed to obtain a branch metric value of that state. Taking selection of 2 states for the PAM4 signal and a 2-tap MLSD as an example, in the relevant solution in the background art, the MLSD has $4^2 = 16$ branch metric combinations for the PAM4 signal, the number of the branch state combinations is reduced to $2^2 = 4$ after the selection, and parallel calculation is performed in 4 branch metric modules.

$$BM[0] = \left(d_{FFE} - h_0 \times a\left(k_{sel}[0](t)\right) - h_1 \times a\left(k_{sel}[0](t-1)\right)\right)^2$$

$$BM[1] = \left(d_{FFE} - h_0 \times a\left(k_{sel}[0](t)\right) - h_1 \times a\left(k_{sel}[1](t-1)\right)\right)^2$$

$$BM[2] = \left(d_{FFE} - h_0 \times a\left(k_{sel}[1](t)\right) - h_1 \times a\left(k_{sel}[0](t-1)\right)\right)^2$$

$$BM[3] = \left(d_{FFE} - h_0 \times a\left(k_{sel}[1](t)\right) - h_1 \times a\left(k_{sel}[1](t-1)\right)\right)^2$$

The calculation result is sent to the add-compare-select module for processing. At the add-compare-select module, for each branch of the branch states, the branch with a smaller sum of the branch metric and the accumulated metric value is selected, and the accumulated metric value and the survivor path are updated. Taking selection of 2 states for the PAM4 signal and a 2-tap MLSD as an example, the branch metric values are subjected to the add-compare-select operation in pairs to output the selection results of 2 states, and the accumulated metric value m is updated. Parallel processing is performed in 2 add-compare-select modules.

$$m[0](t) = \min\{BM[0] + m[0](t-1), BM[1] + m[1](t-1)\}$$

$$m[1](t) = \min\{BM[2] + m[0](t-1), BM[3] + m[1](t-1)\}$$

The state selected by m[0] is denoted as k[0](t), the state selected by m[1] is denoted as k[1](t), and the selection results are sent to the survivor paths.

The survivor path module is configured to store a pointer into the path based on the add-compare-select result of each state branch, and keep the path length unchanged. During backtracking output, the state branch obtained by backtracking is decoded into a corresponding selected state, and then output as a decision result. Taking selection of 2 states for the PAM4 signal and a 2-tap MLSD as an example, k[0](t) and k[1](t) obtained previously by the add-compare-select operation are stored in the survivor paths, and this state k[x](t) represents the pointer of the state x at the moment t to the state at the previous moment. In addition, the previous state selection result $k_{sel}[y](t)$ also needs to be stored in the survivor path, and this state y represents the signal state corresponding to the path state at the moment t. The length L of the survivor path is kept, and therefore the state at the moment t-L is deleted upon adding the state at the moment t.

Backtracking is performed after the path update is completed; the state with a relatively small accumulated metric value is selected as a starting point, forward backtracking is performed based on the pointer of that state to the state at the previous moment until the backtracking length reaches the length L of the survivor path; and the selected state $k_{sel}[0/1]$ corresponding to the state 0/1 ultimately backtracked is a decision result of the MLSD for the signal at the moment t-L+1, and is output as the decision result, i.e. output of digital equalization.

The power consumption and area for the MLSD implementation can be effectively reduced by choosing to reduce the number of branch states of the MLSD. For the a-tap MLSD, the number of signal states can be reduced from n to m based on the embodiment of the present invention. A branch metric operation implemented by an algorithm can be reduced to $\frac{m^a}{n^a}$ in the relevant solution in the background art, the add-compare-select operation can be reduced to $\frac{m^a}{n^a}$ in the relevant solution in the background art, and the number of branches of a survivor path can be reduced to $\frac{m^{a-1}}{n^{a-1}}$ in the relevant solution in the background art. Taking selection of 2 states for the PAM4 signal in a 2-tap MLSD as an example, 16 branch metric values need to be calculated in the relevant solution in the background art, which can be reduced to 4 in the embodiment of the present invention; 4 groups of branch metric values with 4 branch metric values in each group need to be subjected to an add-compare-select operation in the relevant solution introduced in the background art, which is reduced to 2 groups with 2 branch metric values in each group in the embodiment of the present invention; the survivor paths of 4 state branches need to be maintained in the relevant solution introduced in the background art, which is reduced to 2 in the embodiment of the present invention. It can be seen that, after the optimization in the embodiment of the present invention, the power consumption and area required for the MLSD implementation are significantly reduced. Furthermore, using DFE soft value information for selection can ensure digital equalization performance while reducing the number of branch states, thereby avoiding the occurrence of performance loss while reducing power consumption and area costs. In addition, the MLSD and the DFE may also selectively share a self-adaptive coefficient, which can reduce the overhead of the corresponding coefficient self-adaptive module.

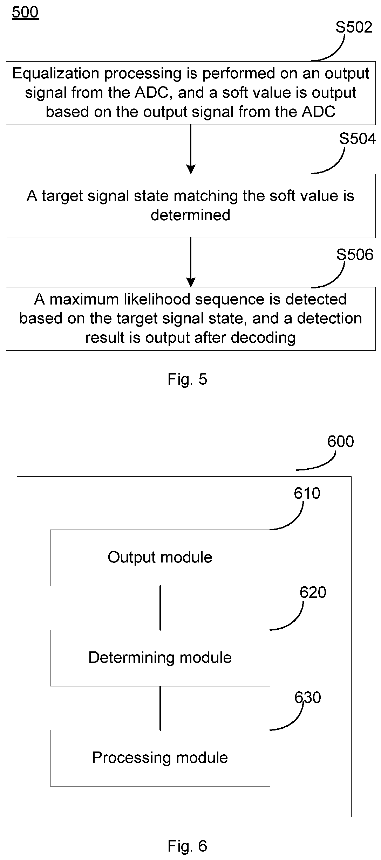

Fig. 5 shows a schematic flowchart of a detection method for a maximum likelihood sequence according to an embodiment of the present invention. The method may be executed by an electronic device, for example, a digital equalizer in a high-speed interconnection device. In other words, the method may be executed by software or hardware installed in the electronic device. As shown in Fig. 5, the method may comprise the following steps.

Step S502: equalization processing is performed on an output signal from the ADC, and a soft value is output based on the output signal from the ADC.

In an implementation, the step that a soft value is output based on the output signal from ADC comprises: a decision result of first input data is delayed; the delayed decision result is multiplied by a second coefficient value to obtain a compensation parameter; and second input data is received, and the second input data is compensated based on the compensation parameter to obtain the soft value. The details are similar to those described in the part of the equalization processing module 10 with reference to Fig. 1 to Fig. 4, and are not described herein again.

Step S504: a target signal state matching the soft value is determined.

In an implementation manner, a level value corresponding to each state of a signal is calculated based on an inputted first coefficient value; a decision threshold is determined based on the level value corresponding to each state; and at least two target signal states matching the soft value are selected from at least three signal states based on the decision threshold.

In an implementation, the step that at least two target signal states matching the soft value are selected from at least three signal states based on the decision threshold comprises at least one of the following.

When the soft value is less than or equal to a first threshold, the target signal state is a first signal state or a second signal state; the first threshold is determined based on a first signal state parameter and a third signal state parameter.

When the soft value is greater than the first threshold and less than or equal to a second threshold, the target signal state is the second signal state or a third signal state; the second threshold is determined based on a second signal state parameter and a fourth signal state parameter.

When the soft value is greater than the second threshold, the target signal state is the third signal state or a fourth signal state.

The details are similar to those described in the part of the equalization processing module 10 with reference to Fig. 1 to Fig. 4, and are not described herein again.

Step S506: a maximum likelihood sequence is detected based on the target signal state, and a detection result is output after decoding.

The details are similar to those described in the part of the detection module 30 with reference to Fig. 1 to Fig. 4, and are not described herein again.

The present invention can select the signal states in the MLSD processing in advance by means of the soft value output of the DFE, and reduce the number of state branches in the MLSD processing, thereby reducing the calculation amount and power consumption for detecting a maximum likelihood sequence.

Fig. 6 shows a schematic structural diagram of a detection apparatus for a maximum likelihood sequence according to an embodiment of the present invention. The detection apparatus 600 comprises: an output module 610, a determining module 620 and a processing module 630.

In an implementation, the output module 610 is configured to perform equalization processing on an output signal from ADC, and output a soft value based on the output signal from ADC; the determining module 620 is configured to determine a target signal state matching the soft value; and the processing module 630 is configured to detect a maximum likelihood sequence based on the target signal state and output a detection result after decoding.

In an implementation, the output module 610 is configured to delay a decision result of first input data; multiply the delayed first decision result by a second coefficient value to obtain a compensation parameter; and receive second input data, and compensate the second input data based on the compensation parameter to obtain the soft value.

In an implementation, the determining module 620 is configured to calculate a level value corresponding to each state of a signal based on an inputted first coefficient value; determine a decision threshold based on the level value corresponding to each state; and select, based on the decision threshold, at least two target signal states matching the soft value from at least three signal states.

In an implementation, the determining module 620 is configured to perform one of the following operations.

When the soft value is less than or equal to a first threshold, the target signal state is a first signal state or a second signal state; the first threshold is determined based on a first signal state parameter and a third signal state parameter.

When the soft value is greater than the first threshold and less than or equal to a second threshold, the target signal state is the second signal state or a third signal state; the second threshold is determined based on a second signal state parameter and a fourth signal state parameter.

When the soft value is greater than the second threshold, the target signal state is the third signal state or a fourth signal state.

The detection apparatus 600 provided in the present invention may execute the methods described in the foregoing method embodiments, and implement functions and beneficial effects of the methods described in the foregoing method embodiments, which are not described herein again.

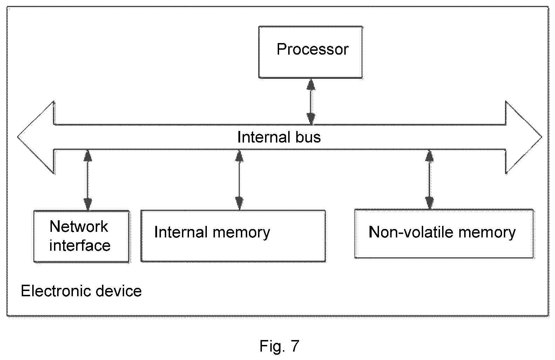

Fig. 7 shows a schematic structural diagram of hardware of an electronic device according to the present invention. Referring to Fig. 7, at the hardware level, an electronic device comprises a processor, and optionally, comprises an internal bus, a network interface, and a memory. The memory may comprise an internal memory, for example, a high-speed Random Access Memory (RAM), and may also comprise a non-volatile memory, for example, at least one disk memory. Certainly, the electronic device may further comprise hardware required by other services.

The processor, the network interface, and the memory may be connected to each other via the internal bus, where the internal bus may be an Industry Standard Architecture (ISA) bus, a Peripheral Component Interconnect (PCI) bus, an Extended Industry Standard Architecture (EISA) bus, or the like. The bus may be classified into an address bus, a data bus, a control bus, and the like. For ease of representation, only one bidirectional arrow is used in this figure for representation, but it does not mean that there is only one bus or one type of bus.

The memory is configured to store a program. Specifically, the program may comprise a program code, where the program code comprises a computer operation instruction. The memory may include an internal memory and a non-volatile memory, and provides instructions and data to the processor.

The processor reads the corresponding computer program from the non-volatile memory into the internal memory and then runs the computer program to form an apparatus for locating a target user on the logical level. The processor executes the program stored in the memory, and is specifically configured to execute the detection method for a maximum likelihood sequence described with reference to Fig. 5, and the same technical effect is achieved.

The method shown in Fig. 5 according to the present invention may be applied to or implemented by a processor. The processor may be an integrated circuit chip, and has a signal processing capability. In the implementation process, each step of the described method may be completed by an integrated logic circuit of hardware in the processor or instructions in the software form. The processor may be a general-purpose processor, including a Central Processing Unit (CPU), a Network Processor (NP), and the like; the processor may also be a Digital Signal Processor (DSP), an Application Specific Integrated Circuit (ASIC), a Field-Programmable Gate Array (FPGA) or other programmable logic devices, a discrete gate or transistor logic device, and a discrete hardware component. The methods, steps, and logical block diagrams disclosed in the present invention can be implemented or executed. The general-purpose processor may be a microprocessor, or the processor may also be any conventional processor. The steps of the methods disclosed in the present invention may be directly implemented by a hardware decoding processor or implemented by the combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in a memory, and the processor reads information in the memory and completes the steps of the described method by means of the hardware thereof.

The electronic device may also execute the methods described in the foregoing method embodiments, and implement functions and beneficial effects of the methods described in the foregoing method embodiments, which are not described herein again.

Of course, besides the software implementation, other implementations of the electronic device of the present invention are not excluded, such as a logic device or the combination of software and hardware, that is to say, the execution subject of the following processing flow is not limited to each logic unit, and may also be a hardware or logic device.

The present invention further provides a computer readable storage medium, wherein the computer readable storage medium stores one or more programs which, when executed by an electronic device comprising a plurality of application programs, cause the electronic device to execute the detection method for a maximum likelihood sequence described with reference to Fig. 5, and the same technical effect is achieved.

The computer readable storage medium includes a Read-Only Memory (ROM), a Random Access Memory (RAM), a magnetic disk, an optical disk, or the like.

Further, the present invention further provides a computer program product, wherein the computer program product comprises a computer program stored in a non-transitory computer readable storage medium, and the computer program comprises a program instruction which, when executed by a computer, implements the detection method for a maximum likelihood sequence described with reference to Fig. 5, and the same technical effect is achieved.

In conclusion, the above descriptions are only preferred embodiments of the present invention, and are not intended to limit the scope of protection of the present invention. Any modifications, equivalent replacements, improvements and the like made within the spirit and principle of the present invention shall fall within the scope of protection of the present invention.

The system, apparatus, module, or unit described in the foregoing embodiments may be specifically implemented by a computer chip or an entity, or implemented by a product having a certain function. A typical implementation device is a computer. In particular, the computer may be, for example, a personal computer, a laptop computer, a cellular telephone, a camera phone, a smart phone, a personal digital assistant, a media player, a navigation device, an email device, a game console, a tablet computer, a wearable device, or the combination of any of these devices.

The computer readable medium includes both persistent and non-persistent, removable and non-removable medium, may implement information storage by any method or technology. The information may be computer readable instructions, data structures, modules of a program, or other data. Examples of the computer storage medium include, but are not limited to, Phase-Change Random Access Memory (PRAM), Static Random Access Memory (SRAM), Dynamic Random Access Memory (DRAM), other types of Random Access Memory (RAM), Read-Only Memory (ROM), Electrically Erasable Programmable Read-Only Memory (EEPROM), flash memory or other memory technology, Compact Disc Read-Only Memory (CD-ROM), Digital Versatile Disc (DVD) or other optical storage, magnetic cassette-type magnetic tape, magnetic tape magnetic disk storage or other magnetic storage device, or any other non-transmission medium, which may be used to store information that may be accessed by a computing device. As defined herein, the computer readable medium does not include transitory computer readable media, such as modulated data signals and carrier waves.

It should also be noted that the terms "comprise" and "contain", or any other variant thereof are intended to cover a non-exclusive inclusion, such that a process, a method, an article, or a device that comprises a series of elements not only comprises those elements, but also comprises other elements that are not explicitly listed, or further comprises elements inherent to the process, the method, the article, or the device. Without more limitations, an element limited by "comprise a..." does not exclude other same elements also existing in a process, a method, an article, or a device that comprises the element.

The embodiments in this description are described in a progressive manner, the same or similar parts of the embodiments may refer to each other, and each embodiment focuses on differences from other embodiments. In particular, as the system embodiment is basically similar to the method embodiment, the description thereof is relatively simple, and for the related parts, reference may be made to the description of the method embodiment.

**Claims**

1. A detection circuit for a maximum likelihood sequence, comprising:

   an equalization processing module, configured to perform equalization processing on an output signal from an analog-to-digital converter ,ADC, and output a soft value based on the Output signal from ADC;
   a state selection module, connected to the equalization processing module and configured to determine a target signal state based on the soft value; and
   a detection module, connected to the state selection module and configured to perform maximum likelihood sequence detection based on the target signal state and output a detection result after decoding.

2. The detection circuit according to claim 1, wherein the state selection module comprises:

   a threshold calculation unit, configured to calculate a level value corresponding to each state of a signal based on an inputted first coefficient value, and calculate a decision threshold based on the level value corresponding to each state; and
   a threshold comparison unit, connected to the threshold calculation unit and configured to select a target signal state matching the soft value.

3. The detection circuit according to claim 1, wherein the equalization processing module comprises:

   a delay processor, configured to delay a first decision result;
   a multiplication processor, connected to the delay processor and configured to multiply the delayed first decision result by a second coefficient value to obtain a compensation parameter;

an input port, connected to the multiplication processor and configured to receive input data, and compensate the input data based on the compensation parameter to obtain the soft value; and

a decision maker, connected to the input port and configured to make a decision on the soft value to obtain a second decision result.

4.  The detection circuit according to claim 1, wherein the equalization processing module, the state selection module and the detection module work at the same time.

5.  The detection circuit according to claim 1, wherein the equalization processing module comprises a feed forward equalizer ,FFE, and/or a decision feedback equalizer ,DFE.

6.  A detection method for a maximum likelihood sequence, comprising:

    performing equalization processing on an output signal from an analog-to-digital converter ,ADC, and outputting a soft value based on the output signal from ADC;

    determining a target signal state matching the soft value; and

    detecting a maximum likelihood sequence based on the target signal state, and outputting a detection result after decoding.

7.  The detection method according to claim 6, wherein outputting a soft value based on the output signal from ADC comprises:

    delaying a decision result of first input data;

    multiplying the delayed decision result by a second coefficient value to obtain a compensation parameter; and

    receiving second input data, and compensating the second input data based on the compensation parameter to obtain the soft value.

8.  The detection method according to claim 6, wherein determining a target signal state matching the soft value comprises:

    calculating, based on an inputted first coefficient value, a level value corresponding to each state of a signal;

    determining a decision threshold based on the level value corresponding to each state; and

    selecting, based on the decision threshold, at least two target signal states matching the soft value from at least three signal states.

9.  The detection method according to claim 8, wherein selecting, based on the decision threshold, at least two target signal states matching the soft value from at least three signal states comprises one of the following steps:

    when the soft value is less than or equal to a first threshold, the target signal state is a first signal state or a second signal state, and the first threshold is determined based on a first signal state parameter and a third signal state parameter;

    when the soft value is greater than the first threshold and less than or equal to a second threshold, the target signal state is the second signal state or a third signal state, and the second threshold is determined according to a second signal state parameter and a fourth signal state parameter; and

    when the soft value is greater than the second threshold, the target signal state is the third signal state or a fourth signal state.

10. A detection apparatus for a maximum likelihood sequence, comprising:

    an output module, configured to perform equalization processing on an output signal from an analog-to-digital converter ,ADC, and output a soft value based on the output signal from ADC;

    a determining module, configured to determine a target signal state matching the soft value; and

    a processing module, configured to detect a maximum likelihood sequence based on the target signal state and output a detection result after decoding.

11. An electronic device, comprising:

    a processor; and

a memory storing computer executable instructions, wherein the executable instructions, when executed by the processor, cause the processor to execute the detection method for a maximum likelihood sequence as claimed in any one of claims 6-9.

12. A computer readable medium, wherein the computer readable medium stores one or more programs which, when executed by an electronic device comprising a plurality of application programs, cause the electronic device to execute the detection method for a maximum likelihood sequence as claimed in any one of claims 6-9.

Detection circuit for maximum
likelihood sequence

10

Equalization processing
module

20

State selection module

30

Detection module

Fig. 1

2

FFE coefficient

DFE/MLSD coefficient

Self-adaptive

Error
signal

Decision result

Soft value output

1

ADC

ADC
output

FFE

FFE
output

DFE

MLSD

MLSD output

Fig. 2

Fig. 3

Fig. 4

500

S502

Equalization processing is performed on an output signal from the ADC, and a soft value is output based on the output signal from the ADC

S504

A target signal state matching the soft value is determined

S506

A maximum likelihood sequence is detected based on the target signal state, and a detection result is output after decoding

Fig. 5

600

Output module 610

Determining module 620

Processing module 630

Fig. 6

Fig. 7

## INTERNATIONAL SEARCH REPORT

| International application No. |
| --- |
| **PCT/CN2023/102686** |

**A.  CLASSIFICATION OF SUBJECT MATTER**

H04L 25/03(2006.01)i

According to International Patent Classification (IPC) or to both national classification and IPC

**B.  FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNABS, CNTXT, VEN, DWPI, CNKI, USTXT, WOTXT, EPTXT, 3GPP: 均衡, 软值, LLR, 最大似然序列, 译码, 电平, 判决, equalizat+, soft value, maximum likelihood sequence, decod+, electrical level, judg+

**C.  DOCUMENTS CONSIDERED TO BE RELEVANT**

| Category* | Citation of document, with indication, where appropriate, of the relevant passages | Relevant to claim No. |
| --- | --- | --- |
| X | CN 113055319 A (HUAWEI TECHNOLOGIES CO., LTD.) 29 June 2021 (2021-06-29) description, paragraphs [0002]-[0151] | 1-12 |
| A | CN 114448559 A (HUAWEI TECHNOLOGIES CO., LTD.) 06 May 2022 (2022-05-06) entire document | 1-12 |
| A | CN 1994003 A (ZTE CORP.) 04 July 2007 (2007-07-04) entire document | 1-12 |
| A | US 10404289 B1 (INPHI CORP.) 03 September 2019 (2019-09-03) entire document | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 September 2023** | **22 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/102686** |

| Patent document cited in search report | | | Publication date (day/month/year) | Patent family member(s) | | | Publication date (day/month/year) |
| --- | --- | --- | --- | --- | --- | --- | --- |
| CN | 113055319 | A | 29 June 2021 | None | | | |
| CN | 114448559 | A | 06 May 2022 | None | | | |
| CN | 1994003 | A | 04 July 2007 | WO | 2006045226 | A1 | 04 May 2006 |
| US | 10404289 | B1 | 03 September 2019 | US | 2020220563 | A1 | 09 July 2020 |
| | | | | US | 11038538 | B2 | 15 June 2021 |
| | | | | US | 2019372607 | A1 | 05 December 2019 |
| | | | | US | 10637512 | B2 | 28 April 2020 |
| | | | | US | 2021306009 | A1 | 30 September 2021 |
| | | | | US | 11575396 | B2 | 07 February 2023 |

Form PCT/ISA/210 (patent family annex) (July 2022)

**EP 4 593 333 A1**

**Patent documents cited in the description**

- CN 202211152294